# EUROPEAN PATENT SPECIFICATION

(11) **EP 3 453 872 B1**
(45) Date of publication and mention of the grant of the patent: **15.06.2022**
(21) Application number: 18193051.2
(22) Date of filing: 06.09.2018
(51) Int. Cl.: F03D 7/02, F03D 1/06

(54) **METHODS FOR MITIGATING NOISE DURING HIGH WIND SPEED CONDITIONS OF WIND TURBINES**
VERFAHREN ZUR ABSCHWÄCHUNG VON LÄRM AN WINDTURBINEN BEI STARKWINDBEDINGUNGEN
PROCÉDÉS PERMETTANT D'ATTÉNUER LE BRUIT PENDANT DES CONDITIONS DE VITESSE DU VENT ÉLEVÉE D'ÉOLIENNES

(30) Priority: 07.09.2017 US 201715697573
(43) Date of publication of application: 13.03.2019
(73) Proprietor: General Electric Company, Schenectady, NY 12345 (US)
(72) Inventor: FISHER, Murray, Greenville, SC 29615 (US); CARROLL, Christian A., Greenville, SC 29615 (US); HERR, Stefan, Greenville, SC 29615 (US); WETZEL, Drew Adam, Greenville, SC 29615-4614 (US); HALLISSY, Benjamin Patrick, Greenville, SC 29615 (US); HERRIG, Andreas, 85748 Garching b. Muenchen (DE); PETITJEAN, Benoit Philippe Armand, 85748 Garching b. Muenchen (US)
(74) Representative: Zimmermann & Partner Patentanwälte mbB

(56) References cited:
- EP-A1- 2 253 839
- WO-A1-92/01156

## Description

The present disclosure relates in general to wind turbine rotor blades, and more particularly to rotor blades that are configured to reduce noise during high wind speed conditions.

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The rotor blades capture kinetic energy of wind using known airfoil principles. The rotor blades transmit the kinetic energy in the form of rotational energy so as to turn a main shaft coupling the rotor blades to a gearbox, or if a gearbox is not used, directly to the generator. More specifically, the rotor blades have a cross-sectional profile of an airfoil such that, during operation, air flows over the blade producing a pressure difference between the sides. Consequently, a lift force, which is directed from a pressure side towards a suction side, acts on the rotor blade. The lift force generates torque on the main shaft, which is geared to the generator for producing electricity. The generator then converts the mechanical energy to electrical energy that may be deployed to a utility grid.

The lift force is generated when the flow from the leading edge to the trailing edge creates a pressure difference between the top and bottom surfaces of the rotor blade. Ideally, the flow is attached to both the top and bottom surfaces from the leading edge to the trailing edge. However, when the angle of attack of the flow exceeds a certain critical angle, the flow does not reach the trailing edge, but leaves the surface at a flow separation line. Beyond this line, the flow direction is generally reversed, i.e. it flows from the trailing edge backward to the separation line. A blade section extracts much less energy from the flow when it separates. Further, flow separation can lead to an increase in blade noise. Flow separation depends on a number of factors, such as incoming air flow characteristics (e.g. Reynolds number, wind speed, in-flow atmospheric turbulence), characteristics of the blade (e.g. airfoil sections, blade chord and thickness, twist distribution, etc.), and operational characteristics (such as pitch angle, rotor speed, etc.).

For some wind turbines, a rise in noise at higher wind speeds (i.e. above rated power) has been observed. Increases in the noise at high wind speeds have been attributed to the rapid growth in the pressure side boundary layer near the outer portion of the rotor blade. For example, once the wind turbine reaches rated power, the turbine maintains rated power by pitching the rotor blades to feather. This pitch to feather reduces the torque generated by the rotor blades and thus maintains the desired power setting. As the blades begin to pitch, the boundary layer over the airfoil surfaces separate rapidly. This can be associated with an increase in the noise. Additionally, beyond the separated flow at the blade tip, as the blade continues to pitch, the pressure side boundary layer thickness increases, which also increases the noise. It is possible that the boundary layer growth and tip separation act on different portions of the rotor blade to increase the noise.

In addition, for conventional wind turbines, backward twist has been applied at the blade tip of the rotor blade (e.g. at the outermost two to three meters) to reduce the tip noise. As rotor blades have become longer and more susceptible to bending, the blade tip twists more than its intended design. This increase in twist acts to also drive the increase in the boundary layer and/or separation to grow.

As such, the industry is continuously seeking improved rotor blades that address the aforementioned issues

An example of a prior art rotor blade is known from WO 92/01156 A1.

Various aspects and advantages of the invention will be set forth in part in the following description, or may be clear from the description, or may be learned through practice of the invention.

In one aspect, the present disclosure is directed to a method for mitigating noise during high wind speed conditions generated by a rotor blade of a wind turbine. The method includes providing a backward twist to an outboard region of the rotor blade having an angle 0° to 2°.
- The method also includes reducing a tip chord taper within at least a portion of the outboard region of the rotor blade.

In addition, in certain embodiments, the backward twist may have a slope of from about 0.003 degrees per meter to about 0.0016 degrees per meter. In further embodiments, the outboard region may expand from about 0% to about 10% from a blade tip of the rotor blade in a span-wise direction. For example, in one embodiment, the outboard region may expand from about 3% to about 5% from the blade tip in the span-wise direction.

In another embodiment, the step of providing the backward twist to the outboard region of the rotor blade may include backward twisting the outboard region of the rotor blade. Alternatively, the step of providing the backward twist to the outboard region of the rotor blade may include providing a blade sleeve over the outboard region of the rotor blade.

In several embodiments, the method may include increasing a torsional stiffness of the outboard region of the rotor blade. In such embodiments, the step of increasing the torsional stiffness of the outboard region of the rotor blade may include providing an additional layer of fiber material in the outboard region of the rotor blade, decreasing a moment arm of the blade tip of the rotor blade, and/or adjusting a position or number of shear webs in the rotor blade.

In further embodiments, the method may also include increasing a local tip chord length of the rotor blade. More specifically, in one embodiment, the method may include increasing the local tip chord length to a range of from about 50 millimeters (mm) to about 400 mm.

According to the invention, the method includes reducing a tip chord taper of the rotor blade. More specifically the slope of the tip chord taper ranges from about -0.25 meter/meter span to about -0.75 meter/meter span.

In another aspect, the present disclosure is directed to a rotor blade assembly of a wind turbine, according to appended claim 8.

In yet another aspect, the present disclosure is directed to a method for mitigating noise during high wind speed conditions generated by a rotor blade of a wind turbine. The method includes increasing a torsional stiffness of an outboard region of the rotor blade. The method also includes backward twisting the outboard region of the rotor blade to an angle of less than 6°. Further, the method includes increasing a local tip chord length of the rotor blade. In addition, the method includes reducing a tip chord taper within at least a portion of the outboard region of the rotor blade. It should be understood that the method may include any of the steps and/or features discussed above or described in greater detail below.

Various aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

In the drawings:
FIG. 1 illustrates a perspective view of a wind turbine according to the present disclosure;
FIG. 2 illustrates a perspective view of one embodiment of a rotor blade of a wind turbine according to the present disclosure;
FIG. 3 illustrates a graph of one embodiment of the back twist of the rotor blade (y-axis) versus the r/R (x-axis) or normalized rotor radius according to the present disclosure;
FIG. 4 illustrates a graph of one embodiment of the aerodynamic twist (y-axis) versus the geometric twist(x-axis) according to the present disclosure;
FIG. 5 illustrates a graph of one embodiment of the CL (y-axis) versus the angle of attack (x-axis) according to the present disclosure;
FIG. 6 illustrates a graph of one embodiment of the tip chord length (C/R) (y-axis) versus the r/R (x-axis) according to the present disclosure;
FIG. 7 illustrates a graph of one embodiment of the chord reduction slope (y-axis) versus the r/R (x-axis) according to the present disclosure;
FIG. 8 illustrates partial top views of rotor blade tips according to conventional construction and according to the present disclosure so as to particularly illustrate a tip chord taper of the blade tip of the present disclosure;
FIG. 9 illustrates a flow diagram of one embodiment of a method for mitigating noise during high wind speed conditions generated by a rotor blade of a wind turbine according to the present disclosure; and,
FIG. 10 illustrates a perspective view of another embodiment of a rotor blade of a wind turbine according to the present disclosure.

Reference now will be made in detail to embodiments of the invention, one or more examples of which are illustrated in the drawings. Each example is provided by way of explanation of the invention, not limitation of the invention.

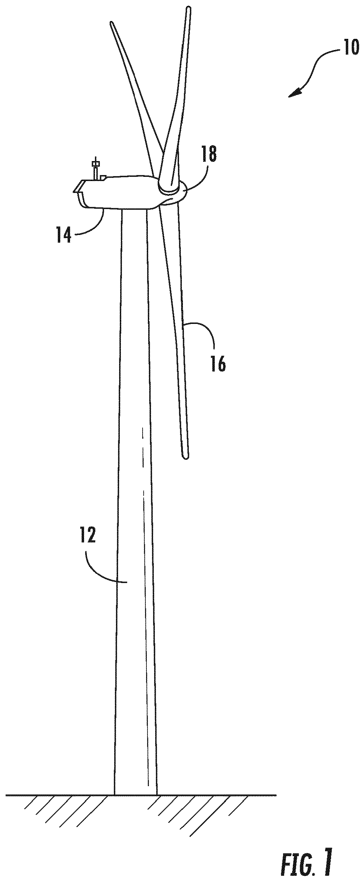

Referring now to the drawings, FIG. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration.

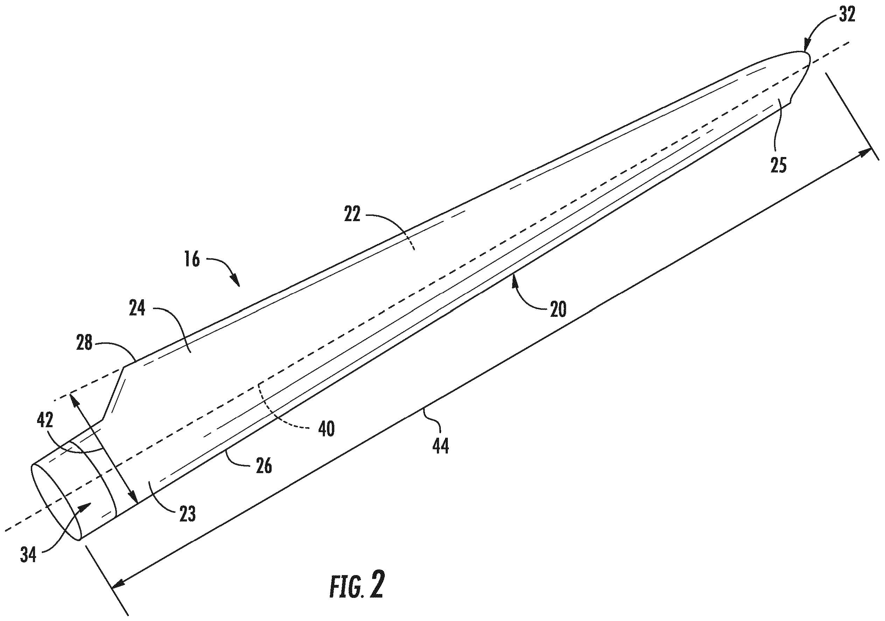

Referring now to FIG. 2, a perspective view of one of the rotor blades 16 of the wind turbine 10 of FIG. 1 is illustrates according to the present disclosure is illustrated. More specifically, as shown, the rotor blade 16 includes one or more features configured to reduce noise associated with high wind speed conditions. As shown, the rotor blade 16 includes an aerodynamic body 20 having an inboard region 23 and an outboard region 25. Further, the inboard and outboard regions 23, 35 define a pressure side 22 and a suction side 24 extending between a leading edge 26 and a trailing edge 28. Further, the inboard region 23 includes a blade root 34, whereas the outboard region 25 includes a blade tip 32.

Moreover, as shown, the rotor blade 16 defines a pitch axis 40 relative to the rotor hub 18 (FIG. 1) that typically extends perpendicularly to the rotor hub 18 and the blade root 34 through the center of the blade root 34. A pitch angle or blade pitch of the rotor blade 16, i.e., an angle that determines a perspective of the rotor blade 16 with respect to the air flow past the wind turbine 10, may be defined by rotation of the rotor blade 16 about the pitch axis 40. In addition, the rotor blade 16 further defines a chord 42 and a span 44. More specifically, as shown in FIG. 2, the chord 42 may vary throughout the span 44 of the rotor blade 16. Thus, a local chord may be defined for the rotor blade 16 at any point on the blade 16 along the span 44. In certain embodiments, the inboard region 23 may include from about 0% to about 97% of the span 44 of the rotor blade 16, whereas the outboard region 25 may include from about 3% to about 5% of the span 44 of the rotor blade 16.

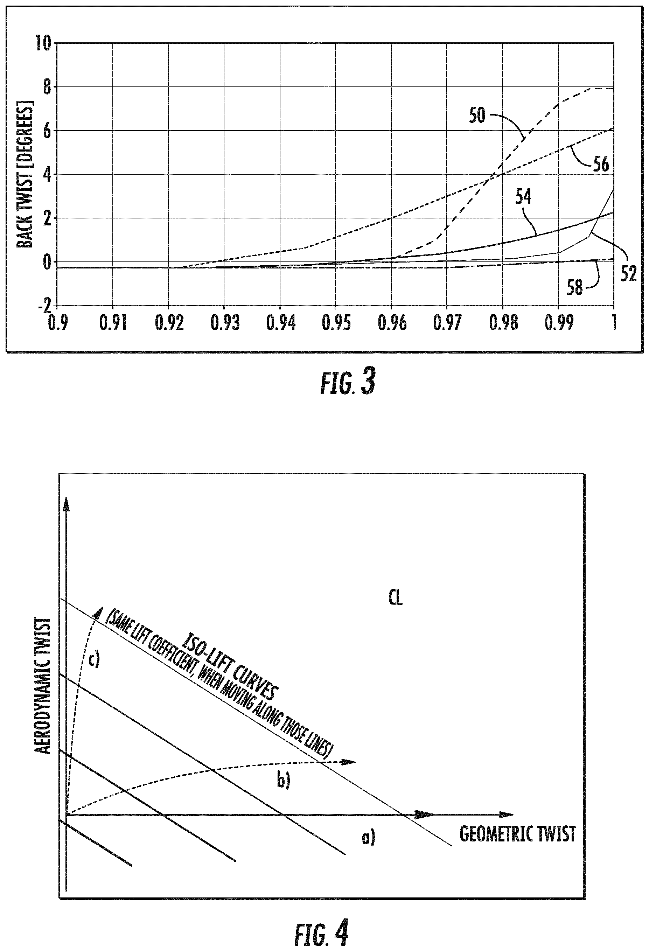

Referring now to FIG. 3, the outboard region 25 of the rotor blade 16 of the present disclosure includes a backward twist of less than 6°. The backward twist or back twist, as described herein, generally refers to a minimum twist in the rotor blade 16 to the twist at the blade tip 32. Thus, FIG. 3 illustrates a graph of backward twist (y-axis) versus r/R (x-axis), which refers to an approximate normalized distance outward from a center of rotation of the blade 16 along the span 44 thereof according to the present disclosure. Accordingly, curves 50, 52 illustrate back twist ranges of prior art rotor blades. In contrast, curve 54 illustrates the back twist of the rotor blades 16 of the present disclosure, as well as the upper and lower ranges 56, 58. More specifically, as shown, the backward twist of the rotor blade 16 of the present disclosure may include angles within a range of from about 0° to about 2° in the outboard region 25.

In addition, the back twist slope can vary in combination with the back twist angle. For example, in certain embodiments, the backward twist may have a slope of from about 0.003 degrees per meter to about 0.0016 degrees per meter. In still further embodiments, the back twist slope may be less than 0.003 degrees per meter or greater than 0.0016 degrees per meter.

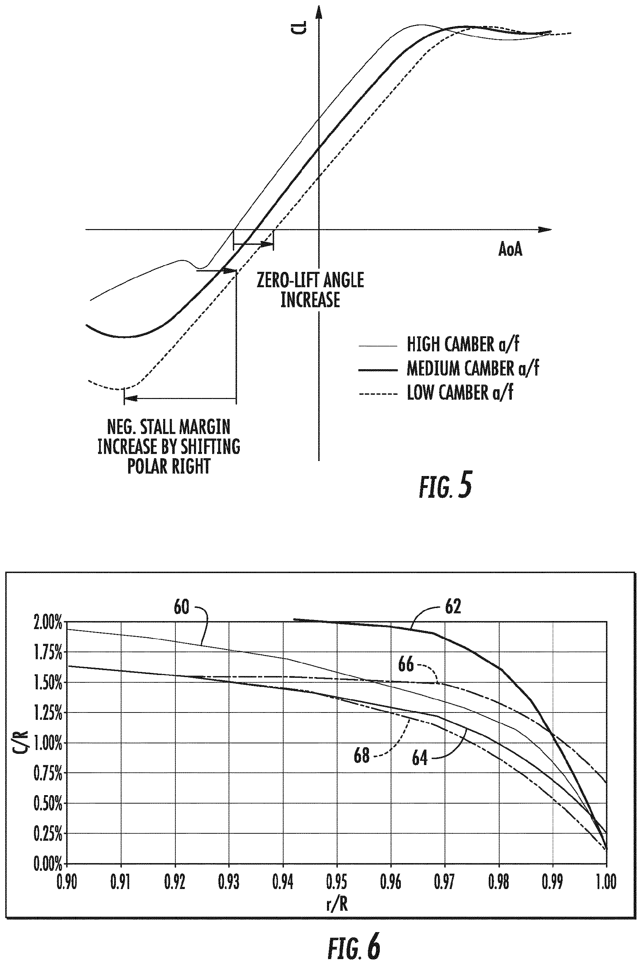

Referring now to FIGS. 4 and 5, various graphs are provided to illustrate the aspect of aerodynamic twisting as well as geometric twisting. More specifically, FIG. 4 illustrates a graph of one embodiment of the aerodynamic twist (y-axis) and the geometric twist(x-axis) according to the present disclosure. As shown, the graph highlights that the same design lift coefficient/axial induction distribution can be achieved in multiple ways when changing the airfoil geometry along the span besides changing the geometric twist. FIG. 5 illustrates a graph of one embodiment of the lift coefficient (CL) (y-axis) versus the angle of attack AoA (x-axis) according to the present disclosure. As such, the present disclosure allows for trading some geometric twist into aerodynamic twist (reduced camber respectively increased zero lift angle), which can further improve the negative stall margin. For example, in one embodiment, 2° of aerodynamic twisting is relatively easy to achieve, which may change some of the proposed twist boundaries accordingly.

More specifically, as shown in FIG. 4, the lift distribution can be adjusted as a function of the aerodynamic twist and/or the geometric twist. For example, curve a) illustrates the lift distribution by purely by changing the geometric twist. Curve b) illustrates the lift distribution by combining aerodynamic twist into geometric twist. Further, curve c) illustrates the lift distribution by dominantly changing the aerodynamic twist and having little geometric twist. In addition, FIG. 5 illustrates aerodynamic twisting by shifting the airfoil polar down and to the right. Thus, as shown, the negative stall margin can be increased by shifting the polar to the right.

In further embodiments, as shown in FIG. 6, the outboard region 25 of the rotor blade 16 may also include a tip chord length designed to manage noise associated with high wind speed conditions and tip vortex noise. More specifically, FIG. 6 illustrates a graph of C/R (which is the chord "C" expressed as a percentage of a distance outward from the center of rotation r/R) (y-axis) versus r/R (x-axis) according to the present disclosure. Accordingly, curves 60, 62 illustrate ranges of prior art rotor blades. In contrast, curve 64 illustrates the tip chord length of the rotor blades 16 of the present disclosure, as well as the upper and lower ranges 66, 68. More specifically, as shown, the normalized chord length ratio 54 may range from about 1.60% at about 0.90 r/R to about 0.25% C/R at r/R. In certain embodiments, for example, the tip chord length 54 may be about 50 millimeters (mm), more preferably about 70 mm in the outboard region 25. In further embodiments, the tip chord length 54 may also be about 250 mm to as much as 400 mm.

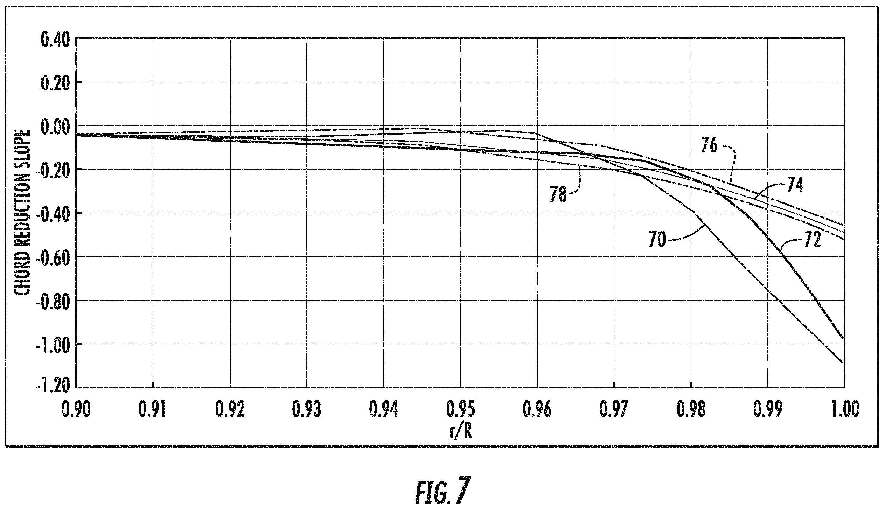

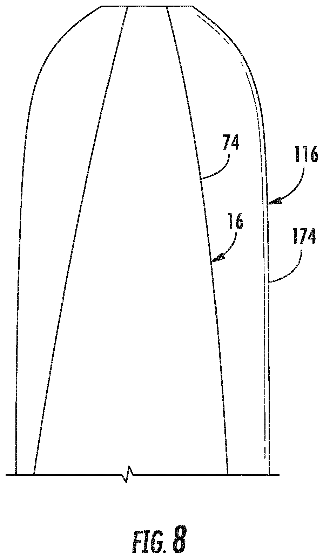

Referring now to FIGS. 7-8, the outboard region 25 of the rotor blade 16 may also include a reduced tip chord taper 74 to mitigate tip vortex noise. More specifically, FIG. 7 illustrates a graph of chord reduction slope (y-axis) versus r/R (x-axis) according to the present disclosure. Accordingly, curves 70, 72 illustrate ranges of prior art rotor blades. In contrast, curve 74 illustrates the tip chord taper of the rotor blades 16 of the present disclosure, as well as the upper and lower ranges 76, 78. More specifically, as shown in FIG. 8, a prior art rotor blade 116 and a rotor blade 16 of the present disclosure are illustrated, each depicting the tip chord taper 174, 74, respectively. To reduce high wind speed conditions, it is important to manipulate the tip flow interaction of conventional rotor blades 116, thus a reduced tip chord taper 74 is required. For example, in one embodiment, the tip chord taper 74 may range from about 0.25 meter/meter span to about 0.75 meter/meter span in the outboard region 25 of the blade 16, e.g. over the outer two percent of the rotor blade 16 non-dimensional blade length (r/R).

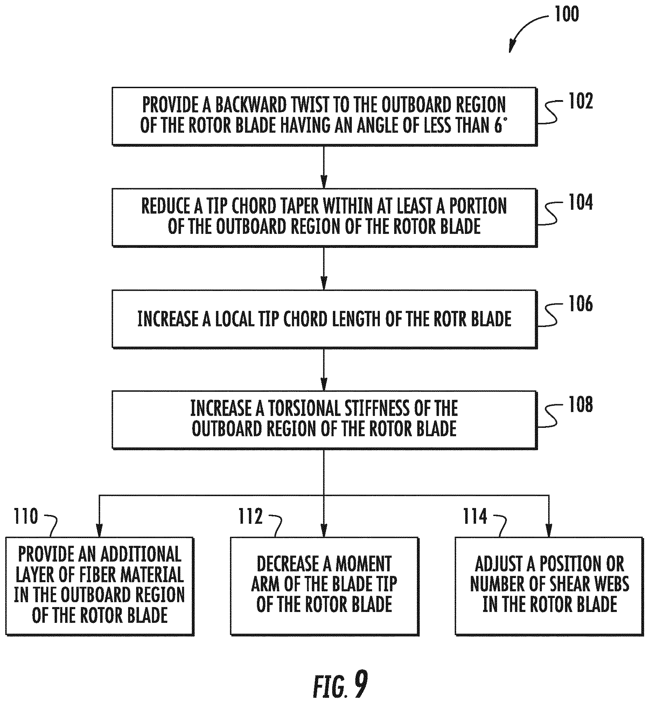

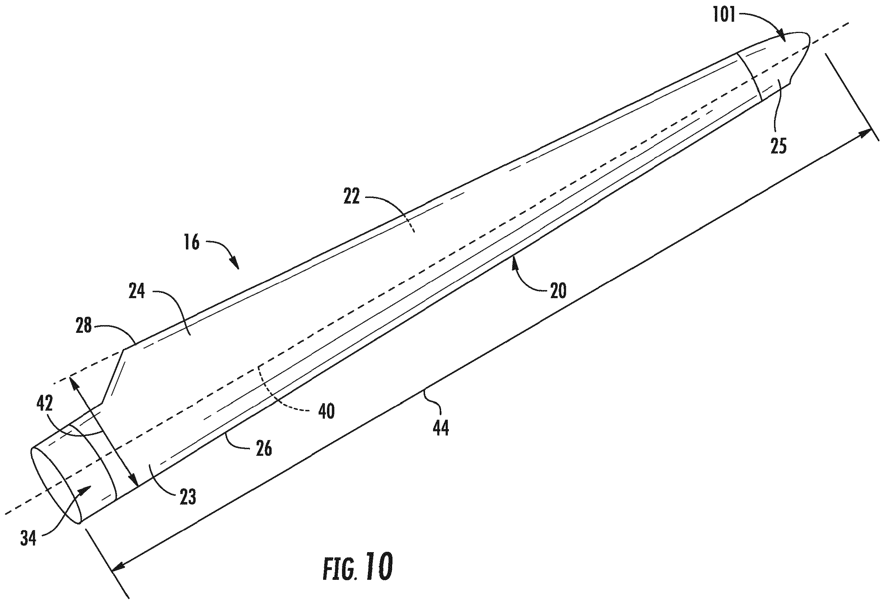

Referring now to FIG. 9, a flow diagram of one embodiment of a method 100 for mitigating noise associated with high wind speed conditions generated by the rotor blade 16 of the wind turbine 10 is illustrated. As shown at 102, the method 100 includes providing a backward twist to the outboard region 25 of the rotor blade 16 having an angle of less than 6°. For example, in one embodiment, the step of providing the backward twist to the outboard region 25 of the rotor blade 16 may include backward twisting the outboard region 25 of the rotor blade 16. Alternatively, as shown in FIG. 10, the step of providing the backward twist to the outboard region 25 of the rotor blade 16 may include providing a blade sleeve 101 over the outboard region 25 of the rotor blade 16.

As shown at 104, the method 100 may also include reducing a tip chord taper within at least a portion of the outboard region 25 of the rotor blade 16. As shown at 106, the method 100 may also include increasing a local tip chord length of the rotor blade 16. As shown at 108, the method 100 may include increasing a torsional stiffness of the outboard region 25 of the rotor blade 16. In such embodiments, as shown, the step 108 of increasing the torsional stiffness of the outboard region 25 of the rotor blade 16 may include providing an additional layer of fiber material in the outboard region of the rotor blade (110), decreasing a moment arm of the blade tip of the rotor blade 16 (112), and/or adjusting a position or number of shear webs in the rotor blade 16 (114). As such, it should be understood that the method 100 of the present disclosure may include any one of or combination of the steps illustrated in FIG. 10 in addition to any of the additional steps and/or embodiments described herein.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method (100) for mitigating noise generated by a rotor blade (16) of a wind turbine (10) during high wind speed conditions, the rotor blade (16) comprising an outboard region (25) extending from about 0% to about 5% from a blade tip (32) of the rotor blade (16) in a span-wise direction, the method (100) comprising:
providing (102) a backward twist to the outboard region (25) of the rotor blade (16) having an angle of 0° to 2° degrees; and
reducing (104) a tip chord taper (74) ranging from -0.25 meter/meter span to -0.75 meter/meter span within at least a portion of the outboard region (25) of the rotor blade (16).

2. The method (100) of claim 1, wherein the backward twist comprises a slope of from about 0.003 degrees per meter to about 0.0016 degrees per meter.

3. The method (100) of any of the preceding claims, wherein providing the backward twist to the outboard region (25) of the rotor blade (16) further comprises at least one of backward twisting the outboard region (25) of the rotor blade (16) or providing a blade sleeve (101) over the outboard region (25) of the rotor blade (16).

4. The method (100) of any of the preceding claims, further comprising increasing (108) a torsional stiffness of the outboard region (25) of the rotor blade (16) including at least one of providing an additional layer of fiber material in the outboard region (25) of the rotor blade (16), decreasing a moment arm of the blade tip (32) of the rotor blade (16), or adjusting a position or number of shear webs in the rotor blade (16).

5. The method (100) of any of the preceding claims, further comprising providing a local tip chord length (64) of the rotor blade (16) to a range of from about 50 millimeters (mm) to about 400 mm.

6. The method (100) of claim 5, further comprising providing a local tip chord length (64) of the rotor blade (16) to a range of from about 70 millimeters (mm) to about 400 mm.

7. The method (100) of claim 5 or 6, further comprising providing a local tip chord length (64) of the rotor blade (16) to a range of from about 250 millimeters (mm) to about 400 mm.

8. A rotor blade assembly of a wind turbine (10), the rotor blade assembly comprising:
an aerodynamic body (20) having an inboard region (23) and an outboard region (25), the inboard and outboard regions (23, 25) defining a pressure side (22), a suction side (24), a leading edge (26), and a trailing edge (28), the inboard region (23) comprising a blade root (34), the outboard region (25) comprising a blade tip (32), wherein the outboard region (25) extends from about 0% to about 5% from a blade tip (32) of the rotor blade (16) in a span-wise direction, **characterized in that** the outboard region (25) comprises a backward twist of 0° to 2°, and
a tip chord taper (74) having a slope ranging from -0.25 meter/meter span to -0.75 meter/meter span.

9. The rotor blade assembly of claim 8, wherein the backward twist comprises a slope of from about 0.003 degrees per meter to about 0.0016 degrees per meter.

10. The rotor blade assembly of claims 8 or 9, wherein the rotor blade (16) further comprises a blade sleeve (101) over the outboard region (25) of the rotor blade (16).

11. The rotor blade assembly of any of claims 8 to 10, wherein the outboard region (25) further comprises at least one structural feature for increasing torsional stiffness thereof, the structural feature comprising at least one of an additional layer of fiber material or an increased number of shear webs in the rotor blade (16).

12. The rotor blade assembly of any of claims 8 to 11, wherein the outboard region (25) further comprises a local tip chord length (64) in a range of from about 50 millimeters (mm) to about 400 mm.

13. The rotor blade assembly of any of claims 8 to 12, wherein the outboard region (25) further comprises a local tip chord length (64) in a range of from about 70 millimeters (mm) to about 400 mm.

14. The rotor blade assembly of any of claims 8 to 13, wherein the outboard region (25) further comprises a local tip chord length (64) in a range of from about 250 millimeters (mm) to about 400 mm.

## Patentansprüche

1. Verfahren (100) zum Abschwächen von Geräuschen, die von einem Rotorblatt (16) einer Windturbine (10) während Bedingungen mit hoher Windgeschwindigkeit erzeugt werden, wobei das Rotorblatt (16) einen Außenbereich (25) umfasst, der sich von etwa 0 % bis etwa 5 % von einer Blattspitze (32) des Rotorblatts (16) in einer Spannweitenrichtung erstreckt, wobei das Verfahren (100) umfasst:
Bereitstellen (102) einer Rückwärtsverwindung für den Außenbereichs (25) des Rotorblatts (16) mit einem Winkel von 0° bis 2° Grad; und
Reduzieren (104) einer Spitzensehnenverjüngung (74) im Bereich von -0,25 Meter/Meter Spannweite bis -0,75 Meter/Meter Spannweite innerhalb mindestens eines Abschnitts des Außenbereichs (25) des Rotorblatts (16).

2. Verfahren (100) nach Anspruch 1, wobei die Rückwärtsverwindung eine Neigung von etwa 0,003 Grad pro Meter bis etwa 0,0016 Grad pro Meter aufweist.

3. Verfahren (100) nach einem der vorhergehenden Ansprüche, wobei das Bereitstellen der Rückwärtsverwindung für den Außenbereich (25) des Rotorblatts (16) ferner mindestens eines umfasst von der Rückwärtsverwindung des Außenbereichs (25) des Rotorblatts (16) oder dem Bereitstellen einer Blatthülse (101) über dem Außenbereich (25) des Rotorblatts (16).

4. Verfahren (100) nach einem der vorhergehenden Ansprüche, ferner umfassend das Erhöhen (108) einer Torsionssteifigkeit des Außenbereichs (25) des Rotorblatts (16), einschließlich mindestens eines von Folgendem: Bereitstellen einer zusätzlichen Schicht aus Fasermaterial im Außenbereich (25) des Rotorblatts (16), Verringern eines Hebelarms der Blattspitze (32) des Rotorblatts (16), oder Anpassen einer Position oder einer Anzahl von Scherstegen im Rotorblatt (16).

5. Verfahren (100) nach einem der vorhergehenden Ansprüche, ferner umfassend das Bereitstellen einer lokalen Spitzensehnenlänge (64) des Rotorblatts (16) in einem Bereich von etwa 50 Millimetern (mm) bis etwa 400 mm.

6. Verfahren (100) nach Anspruch 5, ferner umfassend das Bereitstellen einer lokalen Spitzensehnenlänge (64) des Rotorblatts (16) in einem Bereich von etwa 70 Millimetern (mm) bis etwa 400 mm.

7. Verfahren (100) nach Anspruch 5 oder 6, ferner umfassend das Bereitstellen einer lokalen Spitzensehnenlänge (64) des Rotorblatts (16) in einem Bereich von etwa 250 Millimetern (mm) bis etwa 400 mm.

8. Rotorblattanordnung einer Windturbine (10), wobei die Rotorblattanordnung umfasst:
einen aerodynamischen Körper (20) mit einem Innenbereich (23) und einem Außenbereich (25), wobei der Innen- und Außenbereich (23, 25) eine Druckseite (22),
eine Saugseite (24), eine Vorderkante (26) und eine Hinterkante (28) definieren, wobei der Innenbereich (23) eine Blattwurzel (34) umfasst, der Außenbereich (25) eine Blattspitze (32) umfasst, wobei sich der Außenbereich (25) von etwa 0 % bis etwa 5 % von einer Blattspitze (32) des Rotorblatts (16) in einer Spannweitenrichtung erstreckt,
**dadurch gekennzeichnet, dass** der Außenbereich (25) eine Rückwärtsverwindung von 0° bis 2° aufweist, und
eine Spitzensehnenverjüngung (74) mit einer Neigung im Bereich von -0,25 Meter/Meter Spannweite bis -0,75 Meter/Meter Spannweite.

9. Rotorblattanordnung nach Anspruch 8, wobei die Rückwärtsverwindung eine Neigung von etwa 0,003 Grad pro Meter bis etwa 0,0016 Grad pro Meter aufweist.

10. Rotorblattanordnung nach Anspruch 8 oder 9, wobei das Rotorblatt (16) ferner eine Blatthülse (101) über dem Außenbereich (25) des Rotorblatts (16) aufweist.

11. Rotorblattanordnung nach einem der Ansprüche 8 bis 10, wobei der Außenbereich (25) ferner mindestens ein Strukturmerkmal zur Erhöhung seiner Torsionssteifigkeit aufweist, wobei das Strukturmerkmal eine zusätzliche Schicht aus Fasermaterial und/oder eine erhöhte Anzahl von Scherstegen im Rotorblatt (16) umfasst.

12. Rotorblattanordnung nach einem der Ansprüche 8 bis 11, wobei der Außenbereich (25) ferner eine lokale Spitzensehnenlänge (64) in einem Bereich von etwa 50 Millimetern (mm) bis etwa 400 mm aufweist.

13. Rotorblattanordnung nach einem der Ansprüche 8 bis 12, wobei der Außenbereich (25) ferner eine lokale Spitzensehnenlänge (64) in einem Bereich von etwa 70 Millimetern (mm) bis etwa 400 mm aufweist.

14. Rotorblattanordnung nach einem der Ansprüche 8 bis 13, wobei der Außenbereich (25) ferner eine lokale Spitzensehnenlänge (64) in einem Bereich von etwa 250 Millimeter (mm) bis etwa 400 mm aufweist.

## Revendications

1. Procédé (100) d'atténuation de bruit généré par une pale de rotor (16) d'une turbine éolienne (10) pendant des conditions de vitesse de vent élevée, la pale de rotor (16) comprenant une région extérieure (25) s'étendant à partir d'environ 0 % jusqu'à environ 5 % à partir d'une pointe de pale (32) de la pale de rotor (16) dans une direction dans le sens de l'envergure, le procédé (100) comprenant :
la fourniture (102) d'un vrillage vers l'arrière jusqu'à la région extérieure (25) de la pale de rotor (16) ayant un angle de 0° à 2° degrés ; et
la réduction (104) d'un cône de corde de pointe (74) s'échelonnant à partir de -0,25 mètre/mètre d'envergure jusqu'à -0,75 mètre/mètre d'envergure au sein d'au moins une partie de la région extérieure (25) de la pale de rotor (16).

2. Procédé (100) selon la revendication 1, dans lequel le vrillage vers l'arrière comprend une pente d'à partir d'environ 0,003 degré par mètre jusqu'à environ 0,0016 degré par mètre.

3. Procédé (100) selon l'une quelconque des revendications précédentes, dans lequel la fourniture du vrillage vers l'arrière jusqu'à la région extérieure (25) de la pale de rotor (16) comprend en outre au moins l'un du vrillage vers l'arrière de la région extérieure (25) de la pale de rotor (16) ou de la fourniture d'un manchon de pale (101) sur la région extérieure (25) de la pale de rotor (16).

4. Procédé (100) selon l'une quelconque des revendications précédentes, comprenant en outre l'augmentation (108) d'une rigidité de torsion de la région extérieure (25) de la pale de rotor (16) incluant au moins l'un de la fourniture d'une couche supplémentaire de matériau de fibre dans la région extérieure (25) de la pale de rotor (16), de la diminution d'un bras de moment de la pointe de pale (32) de la pale de rotor (16), ou de l'ajustement d'une position ou d'un nombre d'âmes de cisaillement dans la pale de rotor (16).

5. Procédé (100) selon l'une quelconque des revendications précédentes, comprenant en outre la fourniture d'une longueur de corde de pointe locale (64) de la pale de rotor (16) à un échelonnement d'à partir d'environ 50 millimètres (mm) jusqu'à environ 400 mm.

6. Procédé (100) selon la revendication 5, comprenant en outre la fourniture d'une longueur de corde de pointe locale (64) de la pale de rotor (16) à un échelonnement d'à partir d'environ 70 millimètres (mm) jusqu'à environ 400 mm.

7. Procédé (100) selon la revendication 5 ou 6, comprenant en outre la fourniture d'une longueur de corde de pointe locale (64) de la pale de rotor (16) à un échelonnement d'à partir d'environ 250 millimètres (mm) jusqu'à environ 400 mm.

8. Ensemble de pales de rotor d'une turbine éolienne (10), l'ensemble de pales de rotor comprenant :
un corps aérodynamique (20) ayant une région intérieure (23) et une région extérieure (25), les régions intérieure et extérieure (23, 25) définissant un côté de pression (22), un côté d'aspiration (24), un bord d'attaque (26), et un bord de fuite (28), la région intérieure (23) comprenant un pied de pale (34), la région extérieure (25) comprenant une pointe de pale (32), dans lequel la région extérieure (25) s'étend à partir d'environ 0 % jusqu'à environ 5 % à partir d'une pointe de pale (32) de la pale de rotor (16) dans une direction dans le sens de l'envergure,
**caractérisé en ce que** la région extérieure (25) comprend un vrillage vers l'arrière de 0° à 2°, et
un cône de corde de pointe (74) ayant une pente s'échelonnant à partir de -0,25 mètre/mètre d'envergure jusqu'à -0,75 mètre/mètre d'envergure.

9. Ensemble de pales de rotor selon la revendication 8, dans lequel le vrillage vers l'arrière comprend une pente d'à partir d'environ 0,003 degré par mètre jusqu'à environ 0,0016 degré par mètre.

10. Ensemble de pales de rotor selon les revendications 8 ou 9, dans lequel la pale de rotor (16) comprend en outre un manchon de pale (101) sur la région extérieure (25) de la pale de rotor (16).

11. Ensemble de pales de rotor selon l'une quelconque des revendications 8 à 10, dans lequel la région extérieure (25) comprend en outre au moins une caractéristique structurelle pour l'augmentation de la rigidité de torsion de celle-ci, la caractéristique structurelle comprenant au moins l'un d'une couche supplémentaire de matériau de fibre ou d'un nombre augmenté d'âmes de cisaillement dans la pale de rotor (16).

12. Ensemble de pales de rotor selon l'une quelconque des revendications 8 à 11, dans lequel la région extérieure (25) comprend en outre une longueur de corde de pointe locale (64) dans un échelonnement d'à partir d'environ 50 millimètres (mm) jusqu'à environ 400 mm.

13. Ensemble de pales de rotor selon l'une quelconque des revendications 8 à 12, dans lequel la région extérieure (25) comprend en outre une longueur de corde de pointe locale (64) dans un échelonnement d'à partir d'environ 70 millimètres (mm) jusqu'à environ 400 mm.

14. Ensemble de pales de rotor selon l'une quelconque des revendications 8 à 13, dans lequel la région extérieure (25) comprend en outre une longueur de corde de pointe locale (64) dans un échelonnement d'à partir d'environ 250 millimètres (mm) jusqu'à environ 400 mm.
